# EUROPEAN PATENT SPECIFICATION

(11) **EP 4 426 914 B1**
(45) Date of publication and mention of the grant of the patent: **29.04.2026**
(21) Application number: 22888058.9
(22) Date of filing: 25.10.2022
(51) Int. Cl.: E21B 17/042, F16L 15/06, E21B 47/007, F16L 15/00

(54) **ASYMMETRIC WEDGE THREAD TUBULAR CONNECTION OPTIMIZED FOR PRESSURE AND TORQUE CONTROL**
FÜR DRUCK- UND DREHMOMENTSTEUERUNG OPTIMIERTE ASYMMETRISCHE KEILGEWINDEROHRVERBINDUNG
RACCORD TUBULAIRE À FILETAGE CUNÉIFORME ASYMÉTRIQUE OPTIMISÉ POUR LA COMMANDE DE PRESSION ET DE COUPLE

(30) Priority: 01.11.2021 US 202163274081 P; 24.10.2022 US 202217972068
(43) Date of publication of application: 11.09.2024
(73) Proprietor: Multi Helix Consulting Corp. Inc., Montgomery, TX 77316 (US)
(72) Inventor: CHURCH, Kris, L., Montgomery, TX 77316 (US); LICITRA, Luigi, Spring, TX 77379 (US)
(74) Representative: Dennemeyer & Associates S.A.
(86) International application number: PCT/US2022/047722
(87) International publication number: WO 2023/076263

(56) References cited:
- WO-A1-03/089754
- CN-A- 111 411 903
- CN-A- 111 411 903
- US-A- 5 788 401
- US-A- 6 158 785
- US-A1- 2009 058 085
- US-A1- 2012 074 690
- US-A1- 2012 325 361
- US-A1- 2020 024 911
- US-B1- 6 270 127

## Description

### Technical Field

The present invention relates generally to thread forms of the type used for tubular connections, and, more specifically, to threaded connections useful for securing flow conduits to form a desired continuous flow path in oil and gas country tubular goods.

### Description of the Prior Art

A variety of specialized threaded connections are known in the prior art for joining flow conduits and other tubular members in an end-to-end relationship in secure fashion. For example, such threaded connections are used in pipe strings employed in the oil and gas industry for the production of hydrocarbons and other forms of energy from subsurface earth formations. Examples of such pipe strings include drill pipe, well casing and production tubing, known commonly as "oil country tubular goods" (OCTG). Pipe strings of this type are commonly used in today's hydraulic fracturing operations. While OCTG's are the primary intended use for the threaded connections of the invention, other applications for the threaded connections of the invention include other earth drilling and completion applications, for example, horizontal/trenchless drilling operations, such as those used to install fiber optic cable and other utilities, or non-oilfield applications associated with the construction industry. All of these type goods employ threaded connections of the type under consideration for connecting adjacent conduit sections or pipe joints.

In the case of oil field casing, tubing and drill pipe, it is a common practice to use metal pipes of a definite length, with sections of pipe joined to form a string. The string of pipe effectively creates one lengthier pipe, intended to provide a means to reach the depth at which the reservoirs of gas or oil are found in order to extract oil or gas reserves to the surface. The pipe sections are secured together at their ends by an externally threaded connector, or "pin" that is threadedly received within an internally threaded connector or "box". Each pipe section typically has a pin on one pipe end and a box at the opposite pipe end. Some pipe has an internally threaded coupling secured to one end of a double pin pipe section to produce the box. The individual pipe sections are frequently referred to as a "pipe joint".

In today's oil and gas industry, horizontal drilling and hydraulic fracturing in, for example, shale formations have become an integral part of the industry's portfolio of opportunities for increased oil and gas production. While hydraulic fracturing has become a more or less routine practice, operators in search of competitive advantages continuously push the limits of equipment and technology. Today's operators try to drill deeper, drill longer reach horizontal sections, drill faster and complete the wells faster. It is particularly difficult for tubing, casing and drill pipe connections to meet these increased performance properties, especially the thin wall tubulars, such as small diameter casing, used as the fracturing or "frac" strings, plus other drilling and completion connections.

These frac strings, which have to be installed to reach the fullest length of the well bore, even in the long reach, uncased drilled sections, must have the largest inside diameter and smallest outside diameter possible, yet maintaining the highest torque and fracturing pressure capabilities possible. Frac strings, since they are largely run inside uncased hole, are run as fast as possible, before the formation can collapse. These strings have to be in continuous rotation as they are pushed farther and farther into the uncased hole. In those situations where the bore hole becomes tight, friction on the rotating pipe can cause the torque on the connections to reach exceedingly high levels.

When it became clear to operators that standard industry connectors could not meet the requirements of this type of rigorous service, they quickly gravitated to the use of connectors having dovetail wedge threads, or variants thereof, as shown in the original wedge thread design by Thomas L. Blose (US Pat. RE. 30,647). These types of thread forms are sometimes referred to as "premium threaded connections" in the oil and gas industry.

The Blose wedge thread patents (e.g., US Pat. RE. 306,47) and others disclose a tubular connection having a thread form which provided an unusually strong connection while controlling the stress and strain in the connected pin and box members of the connection. Among other features of these designs, thread root and crest engagement before final assembly prevent premature makeup due to ovality. The first Blose thread forms featured mating helical threads which were tapered in thread width in opposite directions to provide wedge-like engagement of the opposing flanks to limit rotational make-up of the connection.

U.S. Pat. No. 4,600,224, issued Jul. 15, 1986 to Blose was a refinement and further improvement to the original basic wedge thread concept. In the invention disclosed in the '224 patent, a connection was shown having a "chevron" load flank. Radial make-up of the threaded connection was controlled by the special thread structuring where the radial movement of a thread into a mating thread groove was restricted by a chevron type interfit between two load bearing thread surfaces of the threaded connection instead of relying upon thread width alone.

U.S. Pat. No. RE 34,467 issued Dec. 7, 1992 to Doyle Reeves purported to be an improvement to the basic Blose wedge thread design. As explained by the patentee, when Blose's connection is rotatably made up to engage both the front and back thread load flanks, incompressible thread lubricant or other liquid may be trapped between the engaged load flanks. The invention described in Re. Pat. No. 34,467 purports to preclude the possibility of false indication of torque by excluding thread lubricant from between the thread load flanks that are brought into engagement at make-up.

U.S. Pat. Nos. 6,254,146 and 6,722,706, to Kris L. Church, were directed to further improvements in thread forms of the type under consideration. The thread forms shown in these earlier Church patents include a special thread structuring where the radial movement of one thread into a mating thread groove is controlled by a complex profile interfit between the two mating thread surfaces of the threaded connection. The stab flanks complex profile is preferably a multi-faceted flank having at least three facets and four radii per stab flank. The pin thread crests have a crest width and the pin roots have a root width with the width of the crest being less than the width of the roots, which is exactly opposite that of the general dovetail design.

Some of these connections have included a gas resistant thread seal feature. In some cases, the gas seal feature was a metal-to-metal seal region incorporated into the pin and box members. Metal-to-metal seals of this general type are discussed, for example, in U.S. Pat. No. 6,254,146, issued July 3, 2001, to Kris L. Church and in U.S. Pat No. 6,832,789, issued to Kris L. Church. Other simpler designs also exist, for example, the traditional "API 8 Round Thread" is a "thread fit" seal which is screwed together with pipe dope to provide the sealing capability.

U.S. Pat. App. Pub. No. US 2009/058085 A1 pertains to to oilfield tubular threaded connections and, more particularly, to a highly reliable connection with tapered threads and a torque shoulder. Specifically, this document discloses an oilfield tubular threaded connection comprises a pin member having a first radially outer thread and a second radially outer thread axially spaced from the first radially inner thread.

Int. Pat. App. Pub. No. WO 03/089754 A1 pertains to a pipe threaded joint, pipe used in oil and gas extractive industry. Specifically, this document discloses a threaded joint, provided with metallic sealing, for pipes used especially in oil and gas extractive industry, characterized in that an end of a pipe, called pin, provided with some taper surfaces, outside threaded with an asymmetric taper thread, fastens with a coupling, provided with some inside threaded taper surfaces, contact between pin threaded taper surfaces and coupling threaded taper surfaces is accomplished between some pin thread bottom diameters and some coupling thread peak diameters, between some pin thread peak diameters and some coupling thread bottom diameters being achieved a clearance which is, before mechanical make-up, at least equal to total radial load which actuate contact pressure between pin sealing tapered surface and coupling sealing tapered surface.

Chinese Pat. App. Pub. No. CN 111 411 903 A pertains to a method for determining a gap between auxiliary shoulders of a double-shoulder drill pipe joint. Specifically, this document discloses a method for determining the clearance of the secondary shoulder in a double shoulder drill pipe joint, characterized by establishing the optimal secondary shoulder clearance under varying well depths and axial force conditions based on stress-strain characteristics of the joint under complex loads.

Wedge thread connections obtain their torque resistance from the axial squeeze of the threads themselves rather than the jackscrew effect of threads torquing against a separate torque shoulder. Such shoulders require an increase in the connection cross section which, in turn, increases the connection OD and/or decreases the connection ID.

Whereas typical wedge thread connectors are capable of achieving very high torque levels, much higher than standard (non-wedge thread) industry connectors, their assembly often leads to connections being made up with very high axial flank interferences in certain areas and little or no interference in other areas. This then leads to the compromise of pressure containment capabilities.

Thus, despite the improvements in connection design discussed above, a need continues to exist for a threaded connection which can couple tubular pipe sections quickly and efficiently, and which forms a secure connection under a variety of conditions of use, including use in hydraulic fracturing operations.

Ideally, such a connection design, when used in such environments as horizontal drilling and hydraulic fracturing in shale formations, would allow the operator to drill deeper, drill longer to reach horizontal sections and to drill faster and consequently complete wells faster.

The forgoing needs and shortcomings of the prior art are met by the invention to be described in the sections which follow. The present invention which will be described is a further modification of the basic threaded connection design features discussed above which provides improved design characteristics and performance over the prior art and which meets the variously enumerated needs of the prior art discussed above.

### Disclosure of the Invention

The thread form of the invention is intended for use in a tubular connection having a pin member adapted to be made up with a box member to form a pipe connection, the pin member having an exterior surface, an interior surface, a longitudinal axis, and an end face adjacent a mouth opening thereof. The pin member has pin threads with thread crests and thread roots which are adapted to be made up with a mating box member also having threads with thread crests and thread roots to form a secure connection. The pin threads extend from the outer face of the pin member inwardly in a longitudinal direction generally parallel or on a taper to the longitudinal axis of the pin member.

The aforementioned problems and shortcomings are solved by the present invention hereinbelow described. Specifically, a wedge thread tubular connection is provided as set forth in the appended claims.

Additional objects, features and advantages will be apparent from the written description which follows.

### Brief Description of the Drawings

FIG. 1 is a side, quarter sectional view of the pin and box end of a prior art wedge thread connection which is believed to be representative of the present-day wedge thread design, showing the axial dimension thereof referenced from an origin position that is determined by the thread designer;
FIG. 2 is a quarter sectional view similar to FIG. 1, but showing the pin and box ends of a one-step connection featuring the asymmetric thread forms of the invention;
FIG. 3 is a view similar to FIG. 1 of the pin and box ends of another prior art connection, in this case, a two-step connection;
FIG. 4 is a view similar to FIG. 2 of another connection featuring the asymmetric thread form of the invention, in this case, a two-step connection;
FIG.'s 5 and 6 are side, quarter sectional views of a prior art two-step and one-step threaded connections, respectively, where the pin and box members are shown in the made-up position illustrating the consistent and uniform load flank and stab flank engagement which is required throughout the thread region to maintain internal pressure;

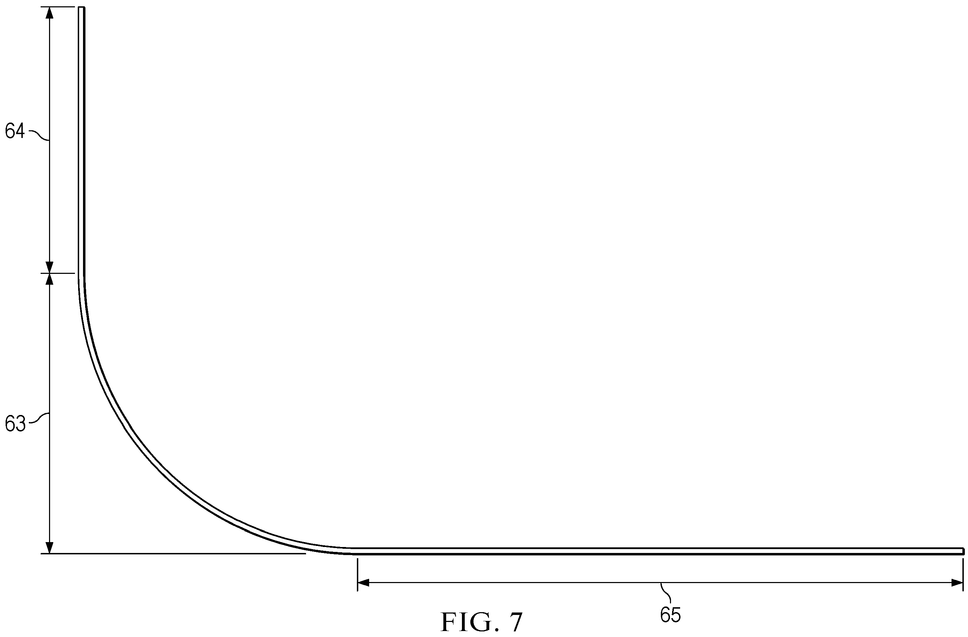

FIG. 7 is a graphical representation of the vertical and horizontal sections of a typical well bore which is the subject of a hydraulic fracturing operation;

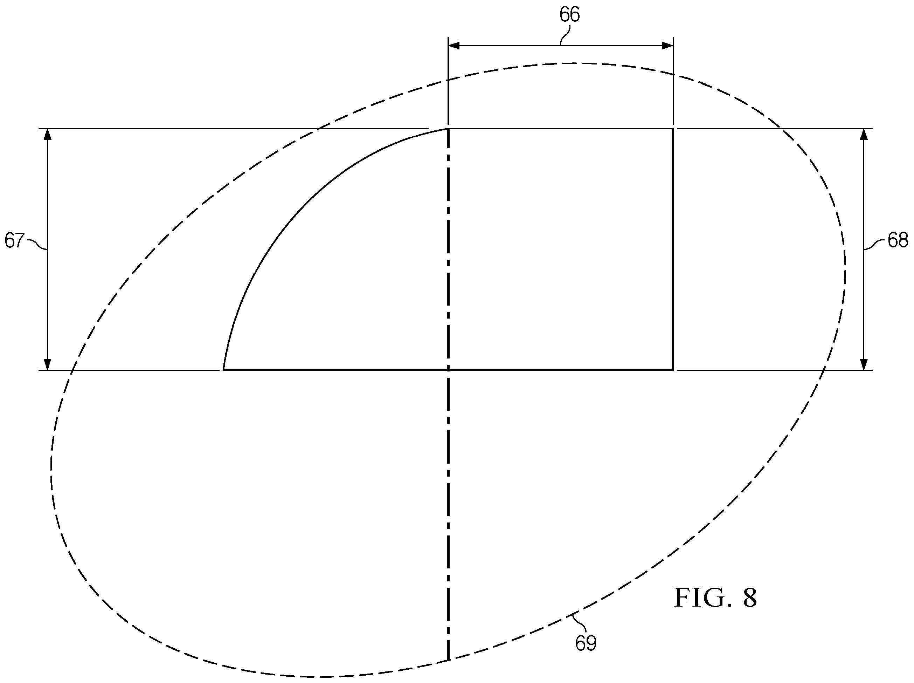

FIG. 8 is a graphical representation of VME envelope of the type which is analyzed and used in optimizing the amount of thread loading and bearing load in a threaded connection of the invention; and
FIG.'s 9-12 are Finite Element Analysis (FEA) examples of symmetric, modified symmetric, and of the asymmetric wedge thread connection of the invention showing the von Mises stress as the connection progressed from the original design to the final design.

### Description of the Preferred Embodiment

The present invention provides a unique type of threaded connection which meets the foregoing described objectives. The improved threaded connection of the invention will be described herein and the various features and advantageous details thereof are explained more fully with reference to the non-limiting examples which are illustrated in the Specification and in the accompanying drawings and detailed in the following description. Descriptions of well-known components and processes and manufacturing techniques are omitted so as to not unnecessarily obscure the workings of the invention. The examples used herein are intended merely to facilitate an understanding of ways in which the invention herein may be practiced and to further enable those of skill in the art to practice the invention. Accordingly, the examples should not be construed as limiting the scope of the claimed invention.

The thread forms of the invention can be used for making a threaded pipe connection capable of being screwed together and subsequently unscrewed and are well adapted for use as Oil Country Tubular Goods (OCTG) connections. The thread forms are used on a connection which includes a pin member having external threads with stab flanks and load flanks and crests and roots for mating with the mating internal threads of a box member to make up a pipe connection.

### I. Shortcomings Of The Existing Wedge Thread Technology:

The shortcoming of the existing wedge thread technology will now be discussed and compared to the asymmetric thread designs of the invention. The connections using the thread forms of the invention are useful in meeting a variety of extreme sealing conditions. While the discussion which follows will center around hydraulic fracturing operations, it will be understood that the invention is not thus limited, but could be applied equally in other challenging sealing environments.

Leak resistance is especially important during hydraulic fracking operations. The most problematic area for pressure containment is in the well bore transition zone (shown as 63 in FIG. 7) between the vertical section (64 in FIG. 7) of the well and the horizontal section (65 in FIG. 7). It is in this transition zone that the tubular string will be at its greatest curvature. The resultant bending forces will tend to make the tube and connections ovalize and change the loading on the thread flanks. Rotation of the pipe in this transition zone adds the potential of damage from fatigue in the threaded area of the connection, as well as in other areas of the connection, especially in the critical cross section of the connection.

Typical prior art wedge thread connections, without optimized, asymmetric thread flank contact throughout their entire length, that are in or have gone through the transition zone, will likely be unable to withstand fracking pressures without leakage through the threads. Accordingly, for this service, many connection suppliers will add a metal-to-metal seal to their connections to contain the fracking pressures. Not only does this add cost, it adds complexity. Metal-to-metal seals have a very limited axial position of maximum engagement for pressure control. This feature also limits the available rotational torque range. Additionally, the metal-to-metal seals could become ovalized in the transition zone, thus losing their required fracturing sealing integrity. Also, if the wedge threads themselves make up further from the application of excess torque, they may become over made up and exceed the position of maximum leak resistance.

An additional consideration is the amount of axial compression applied to the tubular string, in conjunction with rotation, in order to force the tubular string to reach the furthest extent of the horizontal section of the well bore. Operators will tend to continue adding weight and torque on the string until the string advances as intended, pushing the connections to, and sometimes beyond, their limit. Traditional connections will typically fail by the nose of the pin yielding and curling into the ID of the connection. Wedge thread connections typically do not curl into the ID but rather just exceed their maximum make-up position and lose their ability to withstand subsequent frac pressure. However, wedge thread connections having asymmetric, optimized thread engagement as described herein, have an extremely high resistance to increased torque and typically lose no pressure-containing ability.

Another consideration is the high axial tension load that could be applied to the string in certain circumstances, one of which being when the string gets stuck in the horizontal section of the well and can neither be advanced further horizontally nor pulled back and out of the hole. In such an occurrence, the usual practice is to apply the highest possible tensile load to the string until the string starts moving. Unfortunately, that often leads to the connections becoming distorted and compromising their performance integrity.

Fortunately, however, wedge thread connectors having the asymmetric, optimized thread engagement as described herein, having an extremely high resistance to increased torque, can safely have moderately high tension applied to the string while ever increasing amounts of torque are applied until the string starts rotating. Once rotation has begun, friction resistance diminishes, thus allowing the string to be more easily withdrawn from the well bore.

### II. Genesis of Discovery of Asymmetric Wedge Thread Tubular Connection Optimized for Pressure and Torque Control:

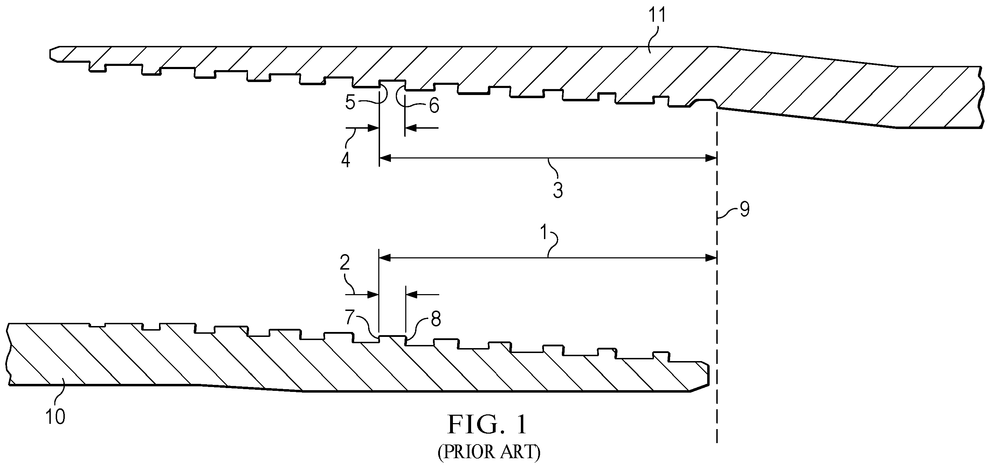

Helically tapered wedge threads, the most common form of wedge thread tubular connections, are manufactured by the passage of a threading insert over repeated passes along the length of the threads at one lead for the stab flank and a different lead for the load flank. The result is a wedge-shaped thread. The mating member uses the same stab and load flank leads. This allows the threads to be screwed together and then fully engage at a theoretical axial position. U.S. Pat. No. 6,270,127, to Enderle, is a typical example of such a prior art helically tapered wedge thread design. With reference to the prior art shown in FIG. 1 of the Enderle patent, the connection includes a pin member and a box member. The box member has a tapered, internal, generally dovetail-shaped thread structure formed thereon and adapted for engaging a complementary tapered, external, generally dovetail-shaped thread structure formed on pin member to mechanically secure the box and pin members in a releasable manner.

The internal thread form of the box member has stab flanks, load flanks, roots, and crests. The thread increases in width progressively at a uniform rate in one direction substantially the entire helical length of thread. The external thread of the pin member also has stab flanks, load flanks, roots, and crests. The thread increases in width progressively at a uniform rate in the other direction substantially the entire helical length of thread.

The Enderle reference is merely intended to be illustrative of a typical prior art wedge thread having pin threads which are symmetric with respect to the box threads. However, it also illustrates important differences in the prior art and the concepts of the the present invention. Enderle teaches how to lower the make-up torque of wedge threaded connections, particularly on very large diameter pipe where rig tongs often lack the torque capacity to fully make up a connection to where its thread flanks are fully engaged throughout their entire length. Basically, the teachings are related to the final made-up condition. Enderle teaches that at final make up there be sufficient clearances within the thread profile to cover different combinations of connector differences throughout the length of a single step or a two-step connection. However, Enderle does not teach or even infer that the gaps be closed throughout the thread profile over the entire length of the connection at final make-up, but with cyclic loading, the thread compound or coating used to plug the gaps between the threads can be squeezed out of the connection, allowing the connection to leak. Leaking connections are normally not allowed in service in the oil and gas industry. This position has been reinforced in recent years by more rigorous cyclic testing of connections being required before the connections are placed in service. In contrast, the teachings of the present invention address connection configurations in the machined state and in the final make-up condition, showing how to produce both uniform and reduced Von Mises stress throughout the length of the connection at final make up, where gaps have been eliminated.

Significantly, in the prior art connections, such as that shown in the Enderle reference, the connectors are designed to be symmetric in order to induce interference needed to produce torque and to hold internal pressure. That is, the box is a mirror image of the pin. In the connections of the invention, however, as will be described in detail, one of the connector members is intentionally made asymmetric with respect to the other connector member.

A well-known problem of wedge thread tubular connections, such as that shown in FIG. 1 of this application, as well as FIG. 1 of Enderle, is the difficulty of configuring them in such a way that the wedging thread forms mate with uniform bearing loads along their entire length. When wedge thread pin threads are mated with wedge thread box threads, axial bearing loads tend to be higher than desired at the start and at the end of the threads. When the wedging thread forms mate with non-uniform bearing loads, two problems occur. First, torque values required to make the connection up to any given axial reference point tend to vary wildly over the allowable torque range. This makes assembly and disassembly difficult and uncertain when the connections are run in service. Second, such connections, when run in service and subjected to combined loads approaching the design limits and transitioning around the von Mises Ellipse (VME), particularly when transitioning from tension to compression with internal pressure, the connections have a tendency to fail to hold rated pressure.

The "von Mises stress" is often used in determining whether an isotropic and ductile metal will yield when subjected to a complex loading condition. This is accomplished by calculating the von Mises stress and comparing it to the material's yield stress, which constitutes the von Mises Yield Criterion. The objective is to develop a yield criterion for ductile metals that works for any complex 3-D loading condition, regardless of the mix of normal and shear stresses. The von Mises stress does this by reducing the complex stress state down into a single scalar number that is compared to a metal's yield strength, also a single scalar numerical value determined from a uniaxial tension test on the material in a lab. It is an empirical process but works well for its intended purpose.

Because connection failure, whether analyzed according to von Mises criteria, or other criteria, is a well-known problem at the present time, operators needing totally reliable highpressure service connections will require that their wedge thread connections all have metal-to-metal seals. However, adding a metal-to-metal seal to a wedge thread connector adds significantly to the cost to manufacture the connector. Also, because of the difficulty of controlling the exact axial make-up position of standard wedge thread connections (a requirement for metal-to-metal seals to function properly) the cost of manufacturing is higher than desired and the cost of properly running and testing these connections is higher than normal. For operators drilling in shale formations for oil and gas, where cost control is of paramount importance, running wedge threads is not attractive economically and would not be done except when the high torque capacity of wedge thread connections is absolutely required.

To better understand the problem of wedge thread tubular connections having inconsistent bearing loads along the entire length of each connector, the inventors used advanced Finite Element Analysis (FEA) techniques and triaxial analysis to determine how wedge threads load and unload along their entire threaded length as the connection is tested around the full limits of the VME. This analysis revealed that connections having uneven bearing loads across their entire threaded length will tend to open and close axially, and even radially, as the VME is circumnavigated. This open and close process, over time, tends to squeeze out of the connections the thread compound applied to lubricate the threads for make-and-break and to seal the threads for pressure control. Once the thread compound is gone, the connections become leak prone.

In order to quantify the magnitude of the loss of bearing load and opening along the length of the threads, the inventors used advanced FEA to manipulate the three triaxial (von Mises) stresses common to threaded tubular connections. These are axial (tension and compression--primarily from service and service pressure loading), radial (from make-up and service pressure loading), and hoop (primarily from make-up and service pressure loading). The three principal stresses can be designated as P1, P2, and P3. P1 is assigned to the highest stress, P2 to the next highest stress and P3 to the lowest stress. In their investigation, the inventors discovered that any male or pin connector that loses hoop compression at any point in the VME test envelope will open radially and possibly leak. Hoop compression is a function of diametrical thread interference configured at makeup and analyzed in the thread regions as shown in FIG.'s 5 and 6. Accordingly, P1 would be hoop stresses. The lowest stress on makeup and in service is normally radial stress and is normally P3. Axial stress is normally P2.

The inventors discovered in their investigation that changes in elasticity throughout the connection caused by the taper and changing wall thickness of the connection, and the distortions from Poisson's Effect, that connections made in this standard manner had threads that opened up under VME loading. Various methods of adjusting axial stress on each thread load and stab flank were explored until it was unexpectedly discovered that offsetting the thread flanks differently as shown in FIG.'s 2 and 4 of the Drawings between the pin and box members by certain amounts could lead to more balanced loading at makeup and optimal loading in VME testing. This is in contrast to the typical symmetric configurations shown in FIG.'s 1 and 3 that do not have uniform axial thread contact throughout the length of the connections.

Since elasticity and the Poisson Effect vary throughout the assembled connectors, the amount of the offset and the resulting asymmetry has to be varied accordingly. For instance, the offset for the first step of a two-step connector will be different from the offset for the second step. Repetitive FEA is required to determine the amount of offset required on each step in order to optimize the amount of thread loading and bearing load present within the required VME envelope as shown as an example in FIG. 8.

Once the interference levels are set and once the offsets for each step are placed at their optimal setting, the connection makes up with precision to a given axial position and thereby withstands a very broad torque range. Then, by adjusting the amount of thread length engagement, the torque range can be set higher or lower for initial make up, allowing for accommodation of commonly used torque equipment while retaining exceptionally high torque capacity beyond that needed for normal operations. In fact, wedge thread connectors with asymmetric threaded sections optimized as described herein, hold full rated pressure within the established VME envelope, thus eliminating the need for a metal-to-metal seal in order to hold internal pressure.

### III. Examples Of Normal Wedge Thread Configurations As Compared to the Unique, Asymmetric Improved Wedge Thread Configurations of the Invention:

In triaxial stress analysis of threaded tubular connections, where P1 is commonly known as the highest principal stress, P2 the second highest principal stress and P3 the lowest principal stress, the three principal stresses (hoop, axial and radial) will sometimes switch between P1 and P2 but normally not between P1 and P3 or between P2 and P3, depending on the different loading and interferences the connections undergo during installation and during fracking operations. However, P3 is normally the radial stress and is not normally subject to becoming a higher principal stress. Pin hoop stress is the main concern for a reliable thread internal pressure seal (and even metal-to-metal internal pressure seals) during the different loading throughout the well bore. Present theory is that the pin member should be in hoop compression during all loading, including during combined loading such as axial tension, or bending with and without internal pressure.

Normally, the diametrical interference required to reliably contain internal pressure will be the P1 principal stress throughout the well bore. Therefore P2, either axial tension or axial compression, can be raised to enhance the performance of the connection without raising the total von Mises stress levels within the threaded region (as shown in Fig.'s 5 and 6 as 61 and 62). In fact, it can and preferably will lower the von Mises stress levels within the threaded region.

By controlling the first two of the three principal stresses, P1, normally hoop, and P2, normally axial, within the threaded area of the connection, improvements can be made in gall resistance during assembly and during disassembly by reducing brinelling from excess loading. This results in higher make-and-break cycles. Controlling P1 and P2 greatly increases torque capacity and significantly increases sealing integrity throughout the length of the thread region. This is because the axial thread flanks will have more uniform contact and elimination of thread flank leak paths throughout the length of the thread region (see FIG.'s 5 and 6), through all combined loading cycles in the well bore.

FIG.'s 1 and 3 are believed to be typical examples of present-day wedge thread design teachings and believed to be in production, and known to be among the highest torque capacity connections currently on the market.

FIG.'s 2 and 4 are teachings of major performance improvements due to stress control by controlling the first two of the principal triaxial stresses discussed above. Also shown is a unique method of improving the reliability of internal pressure thread sealing through control of the two primary principal stresses (P1 and P2) so the sealing integrity will improve substantially and remain sufficient during installation and fracking operations and throughout the installation process and subsequent production through the well bore. In addition, torque capacity can be increased by as much as 100% without damaging the threads. Further, axial compression or axial tension capacity of the connection can be increased substantially. This permits the installation of a much longer tubular member in the horizontal section shown as 65 in FIG. 7 or even a longer tubular member in the vertical section shown as 64 in FIG. 7.

FIG.'s 5 and 6 show the thread region areas that are the subject of this invention. The area 61 is a two-step thread region. The area 62 is a one-step thread region. As has been briefly discussed, FIG. 7 shows the basic design of a shale well bore. The region 63 is the transition zone. The region 64 is the vertical zone and region 65 is the horizontal zone.

### Example 1:

FIG. 1 is a typical example of a one-step tapered symmetric connection showing axial dimensions (1 and 3 in FIG. 1) referenced from the origin position 9 that is determined by the person creating the design to meet the criteria desired. Also shown are the axial tension flanks (load flanks, 5 and 7) and the axial compression flanks (stab flanks, 6 and 8). In addition, the illustration shows a male (pin) member 10 and a female (box) member 11. Also shown is a tooth width (2 in FIG. 1) on the pin member and a mating groove width 4 on the box member.

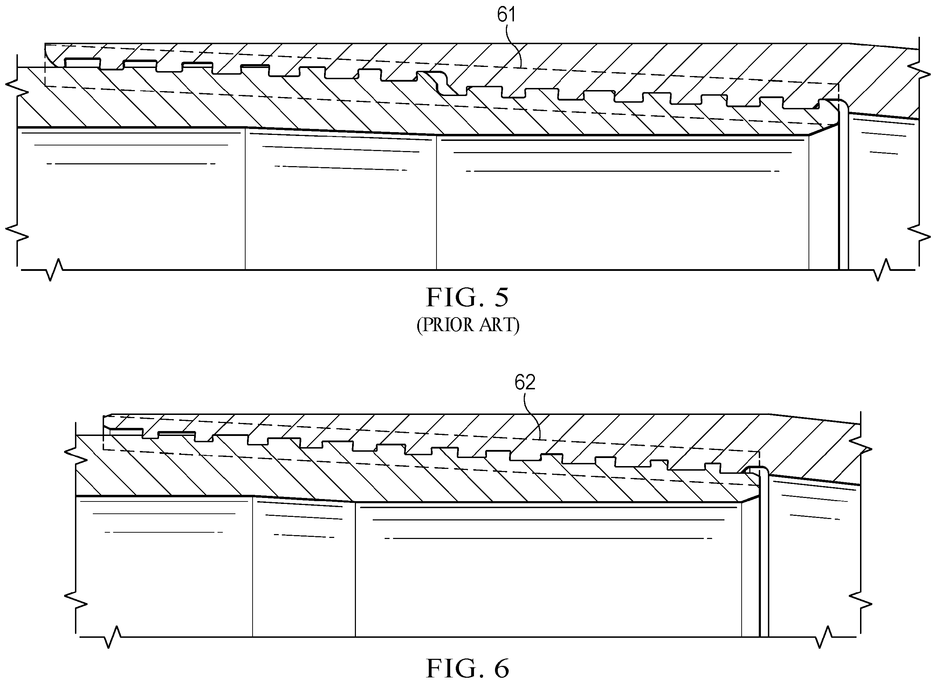

In this example, principal stress P1 is generally the hoop stress required to contain internal pressure, it being understood that the pin is to be in hoop compression during the fracking loads throughout the well bore. This ensures that the roots and crests will stay together (closed) during all loading circumstances throughout the length of the well bore. When P1 is initially established, it should be fixed at basically the lowest diametrical stress level necessary to seal internal pressure. However, the load flank and stab flank helical leak paths require that axial principal stress P2 is sufficient to ensure consistent and uniform flank engagement throughout the thread region shown as 62 in FIG. 6.

Typically, tooth width 2 is wider than groove width 4. This becomes the thread width interference and is used to set a desired torque. However, if the interference is too great, the threads will brinell and gall and greatly hinder the assembly and disassembly of the connection. This excess thread interference situation reduces the reliability of the thread seal and typically fails intermittently during physical testing. The axial dimensions 1 and 3 are the same nominal dimension, neglecting thread width interference.

In this typical configuration there is little or no control of P2 stresses and this will result in gaps opening between the flanks in certain areas and the loss of uniform contact in other areas and this will occur throughout the length of the connection. These gaps must be plugged by thread compound to prevent leaking from internal pressure. Unfortunately, while the pipe string is being rotated as it transitions from vertical to horizontal as shown in FIG. 7 as 63, the pipe and connections are subjected to bending loads with rotation. During this rotation/bending, the stab flanks and load flanks cycle from higher loads to lower loads while being rotated. If the flanks had gaps between them with thread compound filling the gaps, the compound will be squeezed away as the gaps close during the cycling. With further rotation, the chance of the thread compound moving back to the gap is not assured, basically because this rotational open/close function will act more like a pump, forcing the thread compound out of the connection with it not being able to return.

### Example 2:

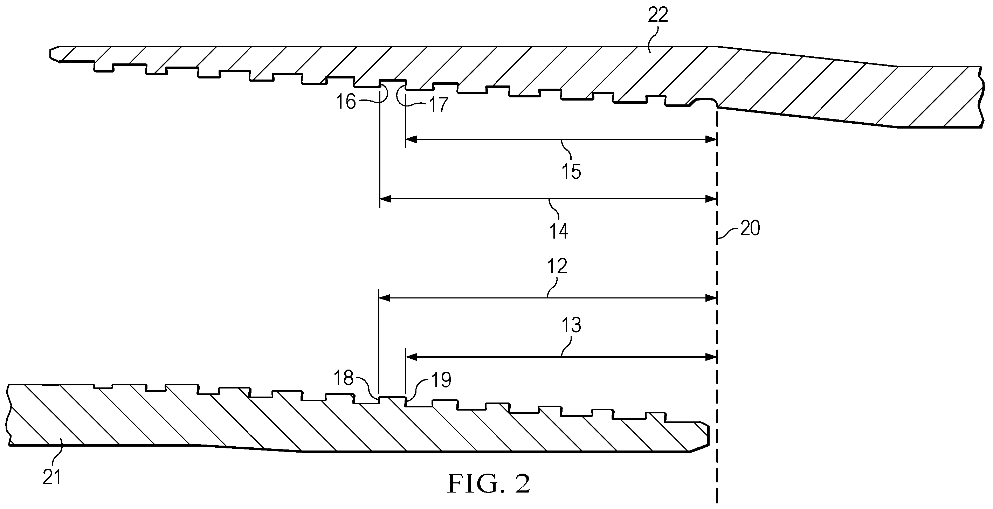

FIG. 2 is an example of a one-step tapered asymmetric connection of the invention which features unique control of the thread flanks by intentionally not pre-establishing the thread widths at a fixed distance from a reference point. All axial dimensions 12, 13, 14 and 15 are determined from the axial origin 20. Axial dimensions 12 and 14 are considerably different from the theoretical interference required for torque resistance. The Pin is numbered as 21 and box as 22. Numbers 17 and 19 are mating stab flanks. Numbers 16 and 18 are the mating loads flanks.

In this example, P1 is the hoop stress required to contain internal pressure and for the pin to be in hoop compression during the fracking loads throughout the well bore. This ensures that the roots and crests will stay in contact during all loading circumstances throughout the length of the well bore. However, closing the load flank and stab flank helical leak paths requires the P2 axial stress to ensure consistent and uniform flank engagement throughout the length of the connection.

Mating axial dimensions 12 and 14 are considerably different to help control axial P2 stress. The dimension 12 is asymmetrically longer than 14. (Theoretical interference visualized in machined state). Mating axial dimensions 13 and 15 are considerably different to help control axial P2 stress. The dimension 13 is asymmetrically longer than 15. (Theoretical axial gap visualized in machined state.) Any gap between 13 and 15 will close and the mating surfaces will gain interference during assembly. Engagement of load flanks 12 and 14 creates an axial stress within the thread region and, as shown in FIG.'s 5 and 6, lowers the von Mises stress.

In contrast, FIG. 1 shows interference on both stab and load flanks as visualized in the machined state so the P2 axial stress does not lower the von Mises stress in the thread region shown as 62 in FIG. 6.

This creates reliable thread sealing and is believed to be more reliable than a metal-to-metal seal because the thread forms lock the connection together radially, the pin is in hoop compression, and the thread flanks are not separating during the loading throughout the length of the well bore. Also, with the threads having uniform contact, the connection can have higher torque resistance without brinelling and galling. This example is of a more robust connection than that depicted in FIG. 1.

### Example 3:

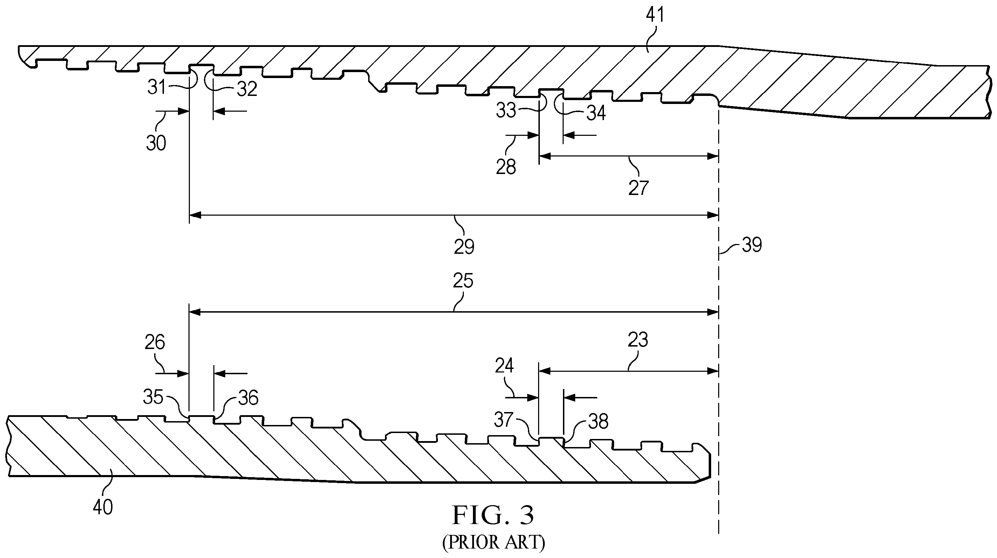

FIG. 3 is a typical example of a two-step tapered symmetric connection showing similar positioning to its axial origin 39 as in FIG. 1 to its axial origin 9. Load flanks 23, 25, 27, and 29 are positioned to the origin 39. Then pin thread tooth widths 24 and 26 are determined by comparing them with mating box thread groove widths 28 and 30. The pin member is numbered as 40 and box member as 41. The stab flanks are shown as 36, 38, 32, and 34. The load flanks are shown as 35, 37, 31, and 33. In FIG. 3, in thread region 61, there is slightly greater control of P2 stresses than in FIG. 1, thread region 62. The reason is because the connection is divided into two parts with two mating steps. There is no change to the P1 hoop stress so the roots and crests maintain sealing integrity. The thread width 24 is wider than groove width 28. The thread width 26 is wider than groove width 30.

These are adjusted in width to achieve the desired torque setting. However, if the interference is too great the threads will brinell and gall, greatly hindering the assembly and disassembly of the connection. This condition reduces the reliability of attaining a thread seal. A major benefit of the connection having two-steps is that the thread flanks will have more uniform contact and therefore higher torque resistance. However, the possibility of brinelling will limit the maximum torque rating. Also, the connection of FIG. 3 will have slightly greater sealing integrity than the connection of FIG. 1. Load flanks at 23 and at 27 have basically the same dimension from the axial origin, neglecting thread width interference.

Load flanks at 25 and 29 have basically the same dimension from the axial origin, neglecting thread width interference.

### Example 4:

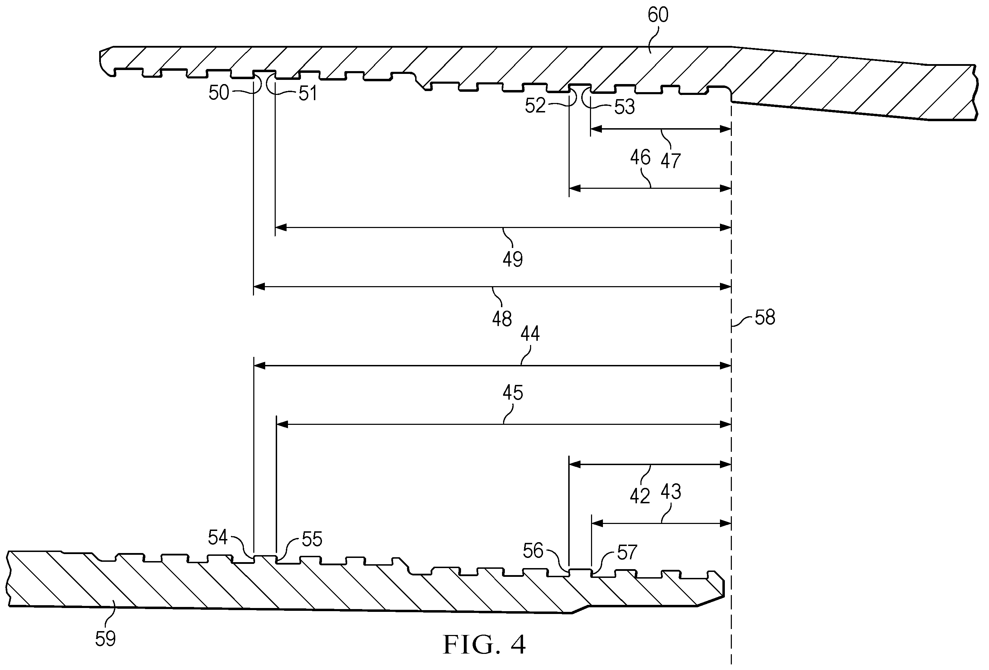

FIG 4 is an example of the unique positioning of the thread flanks by intentionally not pre-establishing the thread widths at a fixed distance from a reference point. FIG. 4 represents even more control of P2 than possible in FIG. 2 because the separation between the two steps increases the number of locations where control of the axial stresses within the connection configuration can be established through the manipulation of distances from those locations and the origin position 58. Dimension 58 is the line of axial origin. Dimensions 50, 54, 52 and 56 are axial tension flanks (load flanks). Dimensions 51, 55, 53, and 57 are axial compression flanks (stab flanks). Reference number 60 is the box and reference number 59 is the pin. Line 58 is the origin position for the axial dimensions.

Load flanks 48 and 44 are mating large step load flanks dimensioned from origin 58. Load flanks 46 and 42 are mating small step load flanks dimensioned from origin 58. Stab flanks 49 and 45 are mating large step stab flanks dimensioned from origin 58. Stab flanks 47 and 43 are mating small step stab flanks dimensioned from origin 58. Load flank 48 is considerably longer than load flank 44 (theoretical axial gap visualized in machined state). Connection make-up is possible only because of pin and box member elasticity. Stab flank 49 is considerably longer than stab flank 45 (theoretical axial interference visualized in machined state) but there is not as much difference as between 48 to 44. The dimension 46 is considerably longer than 42 (theoretical axial gap visualized in machined state) but there is not a greater difference than either 48 to 44 or 49 to 45. The dimension 47 is considerably longer than 43 (theoretical axial interference visualized in machined state) and there is more difference than 46 to 42.

Altering the distances 48, 44, 49, 45, 46, 42, 47, and 43 can be done to manipulate and control P2 axial stresses in the thread zone and lower the von Mises stress within the thread zone. Also, this two-step configuration allows the increased control of the von Mises stress in the thread region 61 (shown in FIG. 5) over the thread region of FIG. 2 because there are double the positions to manipulate.

This P2 stress control will increase uniform contact of stab and load flanks, increase the torque resistance without brinelling, increase the uniform load and stab flanks contact while bending in the transition zone 63 shown in FIG. 7 (with and without internal pressure), and increase the reliability of the primary thread seal throughout the combined loads of the well bore. It will also increase the fatigue resistance of each connection through the transition zone, and increase axial compression capacity needed for extended reach horizontal sections, and increase the possibility of having interchangeability between different connections for pipes of a given pipe diameter.

While the invention has been described in one preferred form, it will be appreciated that the axial positions from the origins may be reversed, depending on the box and pin weakness being addressed, and whether axial tension or axial compression is of greater importance in the particular application.

It will be appreciated from the foregoing discussion, and as illustrated in the foregoing examples, a central concept of the designs of the invention is the fact that the pin connector is intentionally made to be asymmetric to the box. Previous connectors have been designed to be symmetric in order to induce interference needed to induce torque and to hold internal pressure, so that the box is, in effect, a mirror image of the pin. In the connection of the invention, however, the designers intentionally make one member to be asymmetric with respect to the other member in the thread axial direction.

The amount of offset is an unknown number until extensive finite element analyses, usually in three dimensions, are run. Axial offsets are induced until the triaxial stresses are minimized in the threads, around the complete VME envelope for the connection. In a two-step connection, it is typical for the lower step to have a different offset than the upper step. To the typical thread designer, it would appear that a connector designed according to these principles could never be made up without galling and binding. The fact that such a design can be realized is thus testimony to the non-obvious and novel nature of the design. How this exactly occurs is the result of a number of factors. Taking one factor as an example, the elasticity in the steel of the connection allows the initial bearing loads on the mating threads to remain below yield and the loads quickly distribute as the threads are rotated together. Still, some asymmetry in loading will remain to allow the triaxial stresses in the connector to be minimized in all parts of the connector under operational loading, including full VME loading during the transition zone between horizontal and vertical as tension with torque is replaced by compression with torque.

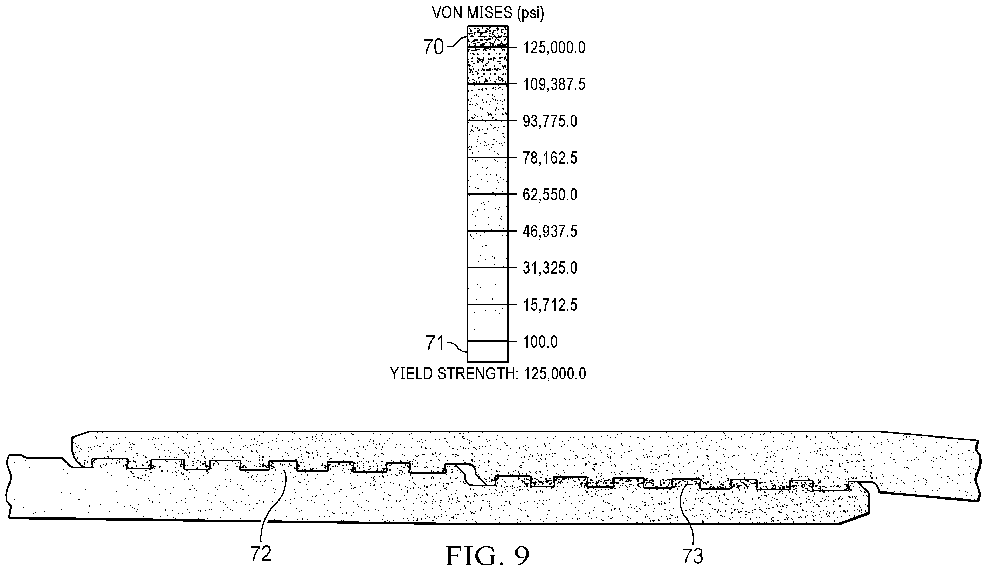

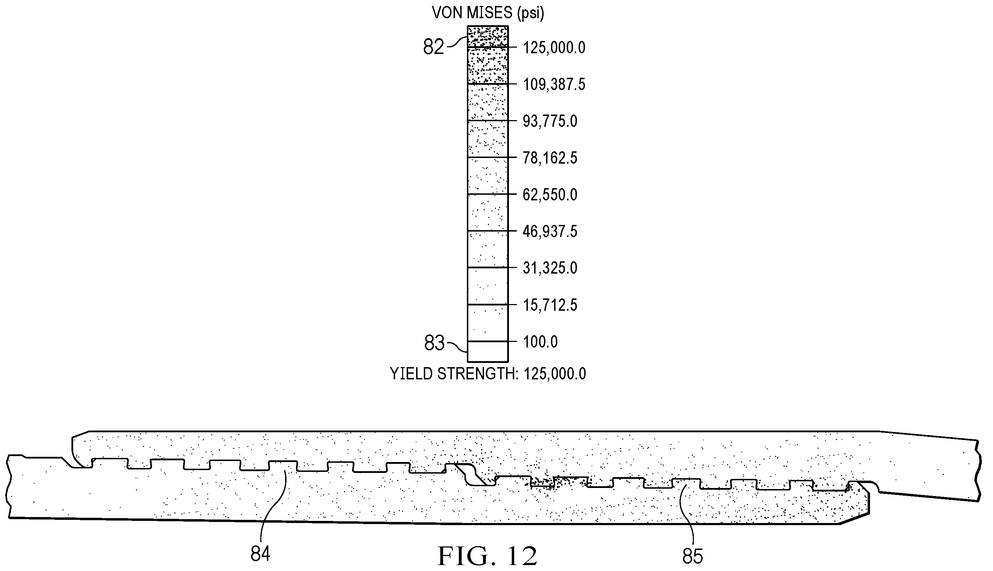

In order to further illustrate these principles, FIG.'s 9-12 are actual FEA "Finite Element Analysis" examples of symmetric (FIG. 9), modified symmetric (FIG.'s 10-11), and asymmetric wedge thread (FIG. 12) connections showing the von Mises stresses. All have equal diametrical interferences, so P1 will be hoop stress. P2 will be axial stress and P3 will be radial stress. The FEA examples illustrate the connection of the invention as it progressed from original design to final design.

Thus, FIG. 9 shows the connector as originally designed by the traditional design method.

FIG. 12 shows the connector in its final form, having been designed by the asymmetric design method.

FIG.'s 10 and 11 represent intermediate design steps in which the thread designers explored ways to overcome the design deficiencies of the connection of FIG. 9, namely the lack of sufficient sealing ability.

FIG. 9 is a symmetric design, similar to FIG. 3, showing the FEA von Mises results. The darker shading upwards on the chart toward 70 on the scale is the higher von Mises stress while the lighter shading lower on the chart toward 71 is lower stress. The region 72 is what is called the large diameter step, while 73 constitutes the small diameter step. Both the large and small diameter steps are showing very high stresses in the thread profile regions. These stresses lead to high hoop P1 stresses and low axial P2 stresses.

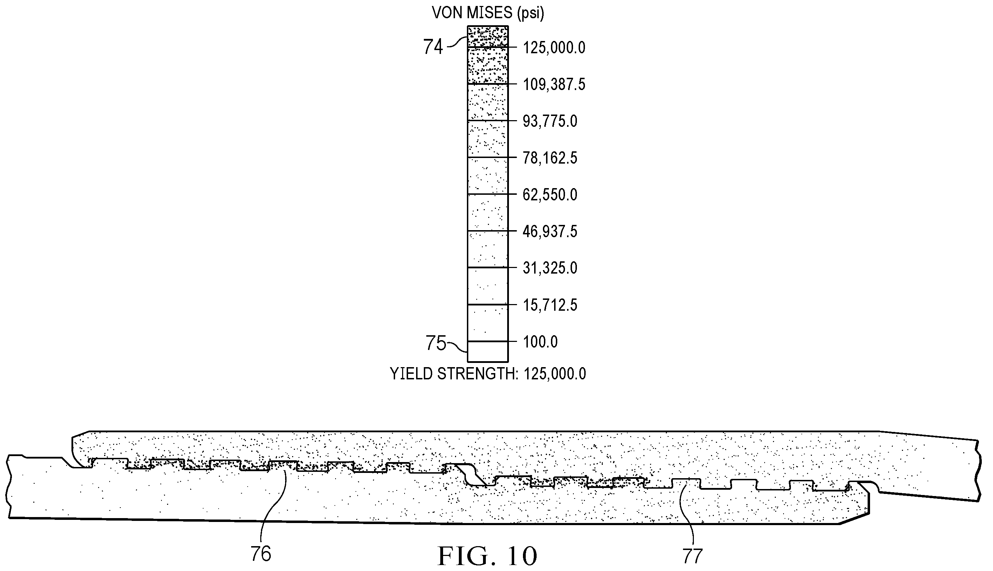

FIG. 10 is a modified symmetric design showing the FEA von Mises results. The darker shading upwards on the chart towards 74 is the higher von Mises stress while the lighter shading lower on the chart towards 75 is lower stress. The region 76 is what is called the large diameter step and the region is the small diameter step. The large diameter step is showing very high stress in the thread profile region, higher stress than in the large diameter step on FIG. 9, but lower stress than in the small diameter step on the FIG. 9 small diameter step. The difference between the illustrations shown in FIG.'s 9 and 10 is that the distance between the steps is lengthened, resulting in the increase of the axial P2 stress. However, the load flanks and stab flanks do not have a uniform contact throughout the length of the connection, possibly creating a leak path during cyclic loading. One attribute of this modification is that the torque range will be increased over FIG. 9.

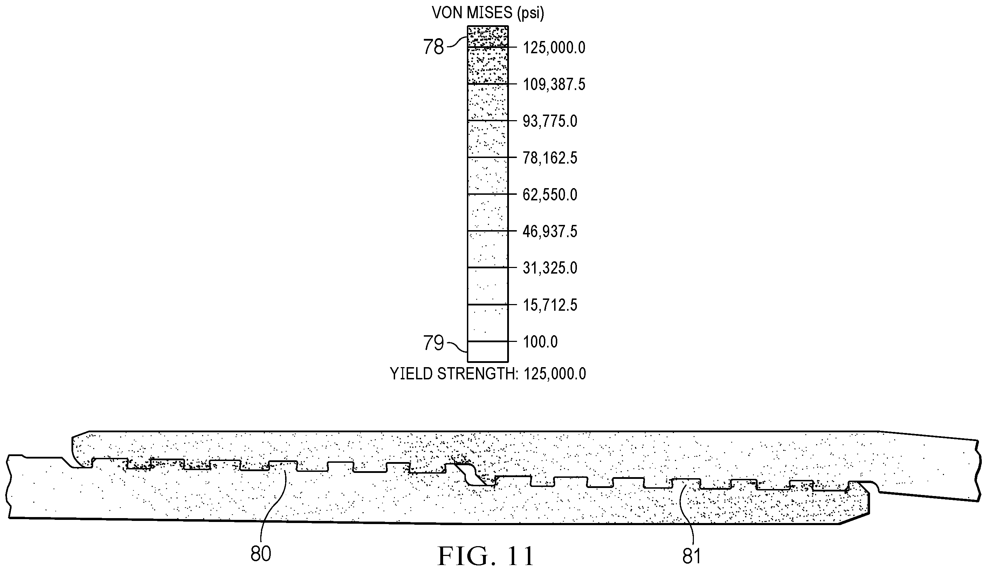

FIG. 11 is another modified symmetric design showing the FEA von Mises results. The darker shading upwards on the chart toward 78 is the higher von Mises stress while the lighter shading lower on the chart toward 79 is lower stress. The region 80 is what is called the large diameter step and 81 is the small diameter step. The large diameter step is showing high stresses in the thread profile region, but lower stress than in FIG.'s 9 and 10, and also lower stress than in FIG.'s 9 and 10 in the small step. The difference between the illustrations shown in FIG.'s 10 and 11 is that the distance between the steps is shortened to be less than that on FIG. 9, resulting in the same equivalent axial P2 stress, although opposite in axial origin. However, the load flanks and stab flanks still do not have a uniform contact throughout the length of the connection, possibly creating a leak path during cyclic loading. One attribute of this modification is that the torque range will be increased over FIG. 10.

FIG. 12 is the asymmetric design of the invention, similar to FIG. 4, showing the FEA von Mises results. The darker shading upwards on the chart toward 82 is the higher von Mises stress while the lighter shading lower on the chart toward 83 is lower Stress. The region 84 is what is called the large diameter step and 85 is the small diameter step. The large diameter step is not showing high stress in the thread profile region as it did in FIG.'s 9-11, and the small step is not showing as high a stress in the thread profile region as in FIG.'s 9-11. These von Mises stresses are lower due to the higher axial P2 stresses imparted on make-up as a result of the asymmetric design. One attribute of this design is that the torque range will be increased over that of illustrations 9, 10 or 11.

In the connection shown in FIG. 9, the design effort was primarily focused on keeping the thread flanks fully engaged on the small diameter step throughout the VME test cycle. The designers were able to change the thread loading by offsetting the small step axially through greater step separation on one member. All threads were separated equally and the thread widths were not changed. It was the traditional design, just with an offset. Stresses were not balanced but the connection was able to hold pressure.

Further efforts to keep all the threads fully engaged axially throughout the VME test cycle led to the connector illustrated as FIG. 10 above where, instead of separating the steps axially, the designers went in the opposite direction and forced the threads together by reducing the separation between the two steps. There were both advantages and disadvantages to this approach but it was clear that stresses in the threads remained completely uneven and unbalanced.

It was after struggling with these issues that the designs realized the present inventive concept of using repetitive FEA analyses to determine how to preload each thread throughout its length in order to get a completely balanced and uniform triaxial stress in every portion of the thread and to then change the thread width reference point to effect those results. This directly led to the discovery of the asymmetric design concept as described in the present specification.

An invention has been provided with several advantages. An improved wedge thread connection is shown, useful for oil and gas well tubing, casing and drill pipe in which a female connector is assembled with an asymmetric male connector. The pin connector is intentionally made asymmetric to the box. The result is a unique method of improving the reliability of internal pressure thread sealing through control of the two primary principal stresses (P1 and P2) so that the sealing integrity will improve substantially and remain sufficient during installation and fracking operations and throughout the installation process and subsequent production through the well bore. In addition, torque capacity can be increased by as much as 100% without damaging the threads. Further, axial compression or axial tension capacity of the connection can be increased substantially. This permits the installation of a much longer tubular member in the horizontal section of the well bore or even a longer tubular member in the vertical section of the well bore.

The asymmetrical connector designs of the invention should result in improved sealing over the length of the connection without requiring a metal-to-metal seal. It is believed that elimination of the metal-to-metal seal feature will greatly reduce the manufacturing costs, typically by up to 50% or 75%. Therefore, by eliminating the metal-to-metal seal, the thread would be the primary seal. The unique configuration of this new wedge thread can and is proven to be a more reliable internal pressure seal than a metal-to-metal seal throughout the length of the well bore subjected to full loading during installation and production, and far less costly.

The scope of protection of the current invention is defined by the appended claims.

## Claims

1. A wedge thread tubular connection (62) for well tubing, casing and drill pipe capable of being screwed together to form a fluid tight seal, the connection comprising:
- a pin member (21) having a pin end with an outer extent and having external threads cut over a given thread length with stab flanks (19) and load flanks (18) and crests and roots, constituting a thread form for the pin member (21);
- a mating box member (22) with a box end having internal threads cut over a given thread length with stab flanks (17) and load flanks (16) and crests and roots, constituting a thread form for the box member (22), for mating with the external threads of the pin member (21) to make up the threaded connection (62);
the wedge thread tubular connection (62) being **characterized in that** the thread form of the pin member (21) is intentionally designed to be asymmetric to that of the box member (22), the pin thread form being offset in a thread axial direction (12, 13, 14, 15) by a predetermined amount, thereby allowing triaxial stresses in the connection to be minimized along an entire length of the threaded connection in use; and
the wedge thread tubular connection (62) being further **characterized in that** the thread offset is increased until triaxial stresses are minimized in the threads around a complete VME envelope for the connection, including a full VME loading cycle during a transition zone between horizontal and vertical, as tension with torque is replaced by compression with torque.

2. The tubular connection of Claim 1, wherein the pin and box threads (17, 19) are machined from a thread width reference point (20), the design being **characterized by** not preestablishing a thread width for the thread form at a fixed distance from the reference point (20).

3. The tubular connection of Claim 2, wherein FEA analysis is used to determine how to preload each thread form throughout its length in order to provide completely balanced and uniform triaxial stress in every portion of the thread, followed by changing the thread width reference point (20) to effect these results.

4. The tubular connection of Claim 3, wherein for a two-step tubular connection having an upper step (57) and a lower step (55), the lower step (55) has a different offset from the upper step (57).

## Patentansprüche

1. Keilgewinde-Rohrverbindung (62) für ein Bohrungssteigrohr, eine Verkleidung und ein Bohrrohr, die fähig sind, miteinander verschraubt zu werden, um eine fluiddichte Abdichtung zu bilden, wobei die Verbindung Folgendes umfasst:
- ein Stiftelement (21), das ein Stiftende mit einer äußeren Ausdehnung aufweist und Außengewinde aufweist, die über eine vorgegebene Gewindelänge mit Stabflanken (19) und Lastflanken (18) und Gipfeln und Basen geschnitten sind und eine Gewindeform für das Stiftelement (21) ergeben;
- ein passgenaues Muffenelement (22) mit einem Muffenende, das Innengewinde aufweist, die über eine vorgegebene Gewindelänge mit Stabflanken (17) und Lastflanken (16) und Gipfeln und Basen geschnitten sind und eine Gewindeform für das Muffenelement (22) für die Passung mit den Außengewinden des Stiftelements (21) ergeben, um die Gewindeverbindung (62) herzustellen;
wobei die Keilgewinde-Rohrverbindung (62) **dadurch gekennzeichnet ist, dass** die Gewindeform des Stiftelements (21) absichtlich asymmetrisch zu der des Muffenelements (22) gestaltet ist, wobei die Stiftgewindeform in einer Gewindeaxialrichtung (12, 13, 14, 15) um einen vorbestimmten Betrag versetzt ist, wodurch eine Minimierung der dreiachsigen Spannungen in der Verbindung entlang einer gesamten Länge der Gewindeverbindung im Gebrauch ermöglicht wird; und
wobei die Keilgewinde-Rohrverbindung (62) ferner **dadurch gekennzeichnet ist, dass** der Gewindeversatz so weit erhöht wird, bis die dreiachsigen Spannungen in den Gewinden um eine vollständige VME-Hülle für die Verbindung herum minimiert sind, einschließlich eines vollständigen VME-Belastungszyklus während einer Übergangszone zwischen horizontal und vertikal, da Spannung mit Drehmoment durch Kompression mit Drehmoment ersetzt wird.

2. Rohrverbindung nach Anspruch 1, wobei das Stift- und das Muffengewinde (17, 19) von einem Gewindebreitenbezugspunkt (20) aus bearbeitet werden, wobei die Ausgestaltung **dadurch gekennzeichnet ist, dass** keine Gewindebreite für die Gewindeform in einem festen Abstand vom Bezugspunkt (20) voreingerichtet wird.

3. Rohrverbindung nach Anspruch 2, wobei eine FEA-Analyse verwendet wird, um zu bestimmen, wie jede Gewindeform über ihre gesamte Länge hinweg vorzubelasten ist, um eine vollständig ausgeglichene und gleichmäßige dreiachsige Spannung in jedem Abschnitt des Gewindes bereitzustellen, gefolgt vom Ändern des Gewindebreitenbezugspunkts (20), um diese Ergebnisse herbeizuführen.

4. Rohrverbindung nach Anspruch 3, wobei bei einer zweistufigen Rohrverbindung, die eine obere Stufe (57) und eine untere Stufe (55) aufweist, die untere Stufe (55) einen gegenüber der oberen Stufe (57) unterschiedlichen Versatz aufweist.

## Revendications

1. Connexion tubulaire à filetage en coin (62) pour des tubes de puits, des tubages et des tiges de forage, apte à être vissée ensemble afin de former un joint étanche aux fluides, la connexion comprenant :
- un élément mâle (21) comportant une extrémité mâle avec une étendue extérieure et comportant des filetages externes taillés sur une longueur filetée donnée avec des flancs d'engagement (19) et des flancs de charge (18) ainsi que des sommets et des fonds, constituant un profil de filetage pour l'élément mâle (21) ;
- un élément femelle complémentaire (22) avec une extrémité femelle comportant des filetages internes taillés sur une longueur filetée donnée avec des flancs d'engagement (17) et des flancs de charge (16) ainsi que des sommets et des fonds, constituant un profil de filetage pour l'élément femelle (22), pour coopérer avec les filetages externes de l'élément mâle (21) afin de constituer la connexion filetée (62) ;
la connexion tubulaire à filetage en coin (62) étant **caractérisée en ce que** le profil de filetage de l'élément mâle (21) est intentionnellement conçu pour être asymétrique par rapport à celui de l'élément femelle (22), le profil de filetage mâle étant décalé dans une direction axiale du filetage (12, 13, 14, 15) d'une quantité prédéterminée, permettant ainsi de minimiser les contraintes triaxiales dans la connexion sur toute une longueur de la connexion filetée en utilisation ; et
la connexion tubulaire à filetage en coin (62) étant en outre **caractérisée en ce que** le décalage du filetage est augmenté jusqu'à ce que les contraintes triaxiales soient minimisées dans les filetages autour d'une enveloppe VME complète pour la connexion, y compris un cycle de chargement VME complet pendant une zone de transition entre l'horizontale et la verticale, lorsque la traction avec couple est remplacée par une compression avec couple.

2. Connexion tubulaire de la revendication 1, dans laquelle les filetages mâle et femelle (17, 19) sont usinés à partir d'un point de référence (20) de largeur de filetage, la conception étant **caractérisée par** le fait de ne pas préétablir une largeur de filetage pour le profil de filetage à une distance fixe du point de référence (20).

3. Connexion tubulaire de la revendication 2, dans laquelle une analyse FEA est utilisée afin de déterminer comment précharger chaque profil de filetage sur toute sa longueur afin de fournir une contrainte triaxiale complètement équilibrée et uniforme dans chaque portion du filetage, suivie d'une modification du point de référence (20) de largeur de filetage afin d'obtenir ces résultats.

4. Connexion tubulaire de la revendication 3, dans laquelle, pour une connexion tubulaire à deux étages comportant un étage supérieur (57) et un étage inférieur (55), l'étage inférieur (55) présente un décalage différent de celui de l'étage supérieur (57).
